(19) **Europäisches Patentamt**

**European Patent Office**

**Office européen des brevets**

(11) **EP 1 605 279 A2**

(12) **EUROPÄISCHE PATENTANMELDUNG**

| | |
|---|---|
| (43) Veröffentlichungstag:<br>**14.12.2005 Patentblatt 2005/50** | (51) Int Cl.7: **G01V 1/30** |

(21) Anmeldenummer: **05012213.4**

(22) Anmeldetag: **07.06.2005**

| | |
|---|---|
| (84) Benannte Vertragsstaaten:<br>**AT BE BG CH CY CZ DE DK EE ES FI FR GB GR HU IE IS IT LI LT LU MC NL PL PT RO SE SI SK TR**<br>Benannte Erstreckungsstaaten:<br>**AL BA HR LV MK YU** | (72) Erfinder:<br>• **Rode, Ernst D.**<br>  **38050 Povo (IT)**<br>• **Abu-Ghazaleh, Timur**<br>  **94032 Passau (DE)**<br>• **Moritz, Jürgen Dr.**<br>  **69121 Heidelberg (DE)** |
| (30) Priorität: **09.06.2004 DE 102004028034** | |
| (71) Anmelder: **Rode, Ernst D.**<br>**38050 Povo (IT)** | (74) Vertreter: **Zellentin, Rüdiger**<br>**Zellentin & Partner,**<br>**Zweibrückenstrasse 15**<br>**80331 München (DE)** |

(54) **Verfahren zur Erfassung und Erkundung von unterirdischen Kohlenwasserstoffvorkommen durch Empfänger von akustischen Wellen in einem Frequenzbereich von 0,2 bis 30 Hz**

(57)      Die Erfindung betrifft ein Verfahren zur Erfassung und Erkundung von unterirdischen Kohlenwasserstoffvorkommen durch an oder nahe der Oberfläche angeordnete Empfänger von akustischen Wellen in einem Frequenzbereich von 0,2 - 30 Hz, wobei erfindungsgemäß über einen Zeitraum T akustische Signale aufgenommen, in um einen Zeitraum $\Delta t$ versetzten Zeitfenstern einer Frequenzanalyse unterzogen werden, wonach jedes Zeitfenster in Frequenzkanäle und mindestens zwei Frequenzgruppen unterteilt und dann die Amplitudenwerte der Frequenzkanäle der Frequenzgruppen korreliert und die Zeitabweichung $\tau$ für das erste von Null abweichende Maximum der Korrelation bestimmt und für diese Zeitabweichung $\tau$ das Verhältnis der Variation der Amplitudenwerte der Maxima der Frequenzgruppen von einem Zeitfenster zu mindestens einem weiteren bestimmt und daraus die Mächtigkeit des Kohlenwasserstoffvorkommens abgeleitet und die Tiefe aus der Zeitabweichung $\tau$ berechnet wird.

[12,28]          [1,6]          Oberfläche

$\frac{\tau}{2}$          $\frac{\tau}{2}$

Konversion          Reservoir

FIG. 2

**Beschreibung**

Zur Erkundung von Kohlenwasserstoffvorkommen bedient man sich unterschiedlicher geophysikalischer, geologischer und geochemischer Verfahren.

Bei all den bekannten Verfahren nimmt die klassische Methode der Reflektionsseismik eine dominierende Rolle ein. Die Reflektionsseismik ist in der Lage, unter bestimmten Bedingungen Strukturen zu erkennen und unter bestimmten Bedingungen auch Aussagen über die Beschaffenheit des Reflektors und auf dessen Eigenschaft zu machen.

Eine direkte Aussage über das Vorhandensein oder Nichtvorhandensein von Kohlenwasserstoffen in erkannten Strukturen ist nicht möglich, was wesentlich an dem Grundkonzept der klassischen Reflektionsseismik und den verwendeten Signalquellen liegt.

Es sind jedoch auch seismische Verfahren bekannt, die auf dem Wege der akustisch/seismischen Spektralanalyse direkte Aussagen über das Vorhandensein oder Nichtvorhandensein von Kohlenwasserstoffen in einer Struktur liefern. Solche Verfahren sind aus dem Patentschriften DE 199 15 036 A1 und US 6,442,489 B1 bekannt.

Diese Verfahren sind vorwiegend passiver Natur, d.h. sie arbeiten ohne äußere Signalquellen und werten das natürliche Erdrauschen aus. Diese Verfahren arbeiten auf der Basis einer Spektralanalyse von niederfrequenten Signalen im Bereich von ca. 0.5 bis 8 Hz, die auf der Oberfläche durch hochempfindliche Seismometer empfangen werden. Die gemessene spektrale Veränderung des Erdrauschens beruht auf der Tatsache, dass in einem Kohlenwasserstoffreservoir, welches ein multifluides System in einem porösen Körper darstellt, eine Konversion höherer Frequenzanteile des akustischen Spektrums zu niederen Frequenzanteilen verursacht wird (Westervelt, Journal of the Acoustical Society of America Vol. 35, No. 4, April 1963). Dieses Verhalten des Kohlenwasserstoffvorkommens wird dadurch verursacht, dass dieses für akustische Wellen einen Bandpass mit sehr niedrigen Grenzfrequenzen und einem nichtlinearen Übertragungsverhalten darstellt. Das nichtlineare Übertragungsverhalten verursacht die Konversion höherer Frequenzanteile. Durch dieses Verhalten werden Mischprodukte der höheren Frequenzanteile des akustischen Erdrauschens und Oberwellen der Mischprodukte gebildet.

Ein elektrisches Analogon ist bekannt. Analoge Begriffe sind "Modulation" und "Klirrfaktor".

Für das Verhalten eines nichtlinearen Übertragungselementes im Hinblick auf das Verhältnis der Amplituden des Mischproduktes zweier Signale mit unterschiedlichen Frequenzen kennt man in der Verarbeitung elektrischer Signale den Begriff "Mischsteilheit" oder "Conversion Transductance", die im Nachfolgenden auch synonym verwendet werden.

Die bekannten Verfahren der akustischen Analyse solcher Signale über einem Erdölvorkommen nutzen das Übertragungsverhalten des Reservoirs und dessen Konversionseigenschaften und abweichend von dem vermuteten Verteilungsbild des Erdspektrums ergeben sich an dem Erscheinungsbild der Mischprodukte Aussagen über das Vorhandensein oder Nichtvorhandensein von einem Kohlenwasserstoffreservoir.

Qualitativ ist diese Aussage (fast) richtig, denn wenn die beobachteten spektralen Abweichungen eindeutig auf die Übertragungseigenschaften des Kohlenwasserstoffvorkommens zurückgeführt werden können, dann ist das Maß der Amplituden im Bereich der spektralen Abweichung zumindest eine qualitative Aussage für das Vorhandensein eines Kohlenwasserstoffvorkommens.

Es gibt jedoch zwei Nachteile dieser bekannten Verfahren:

1. Die Magnitude - oder "Spectral Power" der gemessenen spektralen Komponente ist absolut nicht verwertbar, da sie immer abhängig von der Amplitude der in das Reservoir eingehenden akustischen Wellen ist. Damit lässt sich aus der Magnitude der spektralen Komponenten und dessen Abweichung von den Spektren außerhalb eines Kohlenwasserstoffvorkommens höchstens eine Aussage über das Vorhandensein oder Nichtvorhandensein von Kohlenwasserstoffen ableiten, nicht aber eine eindeutige, quantitative Aussage.

Eine qualitative Aussage über einen längeren Zeitraum, z.B. von 40 Minuten, gemessenen summarischen Spektren wäre jedoch möglich.

2. Die bei bisher bekannten Verfahren der niederfrequenten akustischen Spektroskopie getroffene Aussage, dass einem Kohlenwasserstoffvorkommen "charakteristische" Spektrallinien zugeordnet werden können, ist nicht richtig, wenn nicht falsch.

Das zusammengefasste Spektrum gemessen über einen Zeitraum von 40 min und über solche Zeiträume gemessene Spektren sind relativ stabil, jedoch zeigen sie lediglich das Abbild von Produkten, die an einem Bandpass entstehen mit sehr niedrigen Grenzfrequenzen [0.5-8] Hz, welcher im Durchlassbereich ein stark nichtlineares Übertragungsverhalten hat.

Dieses Bild ist noch überlagert von niederfrequenten Frequenzanteilen von Transienten oder oberflächengebundenen natürlicher oder "man made" akustischen Erscheinungen.

Zusammenfassend ist eine quantitative Aussage über ein Kohlenwasserstoffvorkommen praktisch nicht möglich und eine qualitative Aussage nur mit einem erheblichen "Interpretationsaufwand".

Die vorliegende Erfindung soll die obengenannten Nachteile vermeiden und die spektrale Schwankung und die Einflüsse des unstabilen Oberflächenrauschens ausnutzen, um eine davon unabhängige quantitative Aussage über die Mächtigkeit des Kohlenwasserstoffvorkommens abzuleiten. Das gemäss der Erfindung angewendete Verfahren liefert zudem noch eine Aussage über die Tiefe des Vorkommens, was mit den bisher bekannten Verfahren so nicht möglich ist.

Diese Aufgabe wird durch ein Verfahren mit den Merkmalen des Anspruchs 1 gelöst.

Vorteilhafte Ausgestaltungen des Verfahrens sind den Unteransprüchen zu entnehmen.

Erfindungsgemäß wird davon ausgegangen, dass unterschiedliche Oberflächenwellen jeder Art auch Kompressionswellen erzeugen, die ein unter dem Messpunkt befindliches Reservoir erreichen. Die höheren Frequenzanteile solcher Wellen werden im Reservoir, welches einen Bandpass mit niederfrequenten Grenzfrequenzen etwa von 0.5 bis 8 Hz und einer nichtlinearen Übertragungsfunktion zu Mischprodukten mit Frequenzen konvertiert, die nur im Bereich der Durchlasskurve des Bandpasses liegen.

Für die Veränderung der konvertierten Wellen im niederen Frequenzbereich (Variation) und die Veränderungen der eingehenden Wellen im höheren Frequenzbereich gilt dann vereinfacht die Beziehung

$$\Delta P_1[1,6]=S \bullet \Delta P_2[12,28] \qquad (1)$$

wobei

$\Delta P_1[1,6]$ die Variation eines Maximums der Frequenzanteile im Intervall [1,6] Hz in einem Zeitraum $\Delta t$ darstellt und

$\Delta P_2[12,28]$ die Variation eines Maximums der Frequenzanteile im Intervall [12,28] Hz in einem Zeitraum $\Delta t$ darstellt

wobei S das Verhältnis oder die Variation der Amplitudenwerte bzw. die "Mischsteilheit" oder "Conversion Transductance"

bedeuten.

Die Mischsteilheit S wiederum ist proportional der Mächtigkeit des Kohlenwasserstoffvorkommens unter einem an der Oberfläche plazierten akustischen Empfänger z. B. einem Seismometer und es gilt die Beziehung

$$S=k \bullet NPZT \qquad (2)$$

wobei

k ein Proportionalitätsfaktor ist

und

NPZT = Net Oil Pay Zone Thickness

bedeuten.

k lässt sich entweder an vorhandenen Bohrungen bestimmen oder im Falle von Explorationsbohrungen nimmt man für k einen Erfahrungswert an, als erste Näherung, der der Konstante aus bekannten und geologisch ähnlichen Vorkommen entspricht, was als erste Näherung in der Praxis durchaus ausreichend ist.

Um zur Beziehung (1) zu gelangen, wird beispielhaft erfindungsgemäß der folgende Weg vorgeschlagen:

1. Mit einem hochempfindlichen Seismometer werden über einem Kohlenwasserstoffreservoir an der Oberfläche - vorzugsweise mit einem 3-Komponentenseismometer - akustische (seismische) Signale im Frequenzbereich von etwa zwischen 0.5 und 30 Hz aufgenommen. Die Aufnahme erfolgt über einen längeren Zeitraum von z.B. 40 Minuten oder auch länger.

2. Die aufgenommenen analogen Signale werden mit einem A/D Wandler in üblicher Weise digitalisiert und in einem Datenspeicher abgelegt. Die Sampling rate des A/D Wandlers beträgt mindestens 100 samples per second (sps).

3. Die Datenmenge wird nun einer Fourieranalyse unterzogen, wobei man jeweils ein Zeitfenster von z.B. 30 Sekunden Dauer betrachtet, welches in Schritten von 0.01 Sekunden über den gesamten Aufnahmezeitraum erhoben wird.

4. Jedes der 30-Sekundenfenster wird im betrachteten Frequenzraum in Kanäle von einer Breite von z.B. 0.2 Hz unterteilt:

Im Intervall [1,6] Hz erhält man 25 Kanäle und mit dem über jeden Kanal gebildeten Integral 25 Zahlenwerte für jedes Zeitfenster.

Im Intervall [12,28] Hz erhält man 80 Kanäle und mit dem über jeden Kanal gebildeten Integral 80 Zahlenwerte für jedes Zeitfenster.

Über den Zeitbereich von 40 Minuten erhält man dann für jeden Frequenzkanal ein eindimensionales Array mit

$(2400-30) \cdot 100 = 237000$ Zahlenwerten (Elementen), wobei der Messzeitraum 2400 Sekunden und die Fensterlänge 30 Sekunden ist. Die Fenster werden um 0,01 (ein Hundertstel) Sekunde verschoben, bis das Ende eines Fensters die Marke 2400 erreicht, d.h. der Verschiebezeitraum ist (2400 - 30) Sekunden und ergibt (2400 - 30) x 100 Einzelfenster bzw. Zahlenwerte bzw. Elemente des Arrays.

Oder allgemein ein Array mit $(T - t_F) \cdot SR = N$
wobei

T  die Aufnahmelänge

$t_F$  die Fensterlänge

SR  die Sample Rate

und

N  die Anzahl der Elemente in einem Array

bedeuten.

5. Jedes der Arrays g aus dem Intervall [1,6] wird jetzt mit jedem Array h aus dem Intervall [12,28] korreliert (Cross Correlation) und zwar über alle zeitversetzten 30-Sekundenfenster entsprechend:

$$Corr(g,h)_j = \sum_{k=0}^{N-1} g_{i+k} \bullet h_k \qquad \textbf{(3)}$$

  wobei j: 1 bis 2 N-1 ist
 wobei N die Länge von beiden Arrays darstellt.

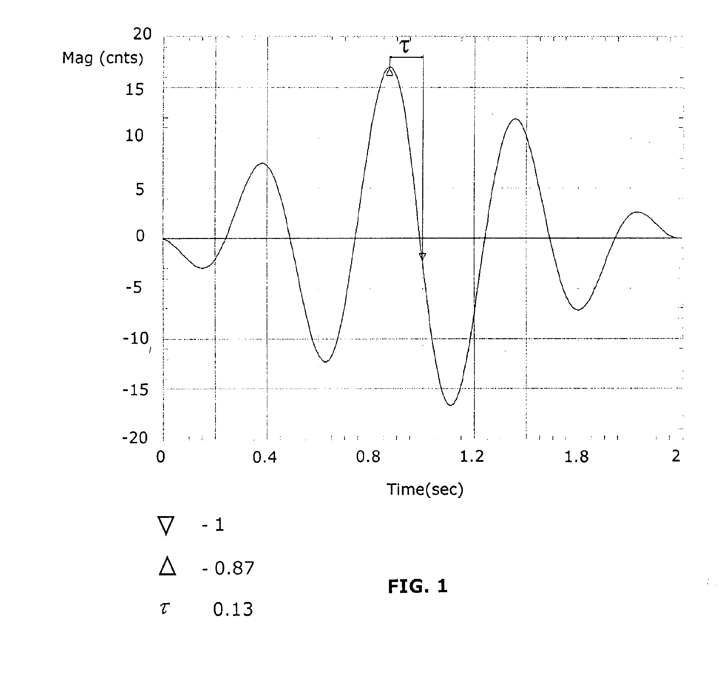

6. Weiterhin wird jetzt eine Bedingung eingeführt, die notwendig erfüllt sein muss, um das Vorhandensein eines Kohlenwasserstoffvorkommens nachzuweisen. Die Zeitverschiebung r des ersten Maximums der Korrelationsfunktion ausgehend von der "Mitte" der Korrelationsfunktion muss ungleich Null sein oder es muss sogar gelten, $\tau \phi \varepsilon$, wobei $\varepsilon$ ein vorgegebener Grenzwert von z.B. 0.1 Sekunden ist, siehe dazu Abb.1.
 Als "Mitte" der Korrelationsfunktion ist definiert

$$corr(g,h)i \qquad\qquad (4)$$

mit

wobei

$$i=(2N-1)\div 2$$

Dieser Bedingung liegt folgender Gedankengang zugrunde: Um aus der Variation der Frequenzkanäle [1,6] und [12,28] die Mischsteilheit (Konversion Transductance) ermitteln zu können, müssen die Frequenzanteile im Intervall [1,6], die etwa an der Oberfläche vorhanden sind, von denen getrennt werden, die im Reservoir durch Konversion als Mischprodukte aus höheren Frequenzanteilen aus dem Intervall [12,28] entstehen.

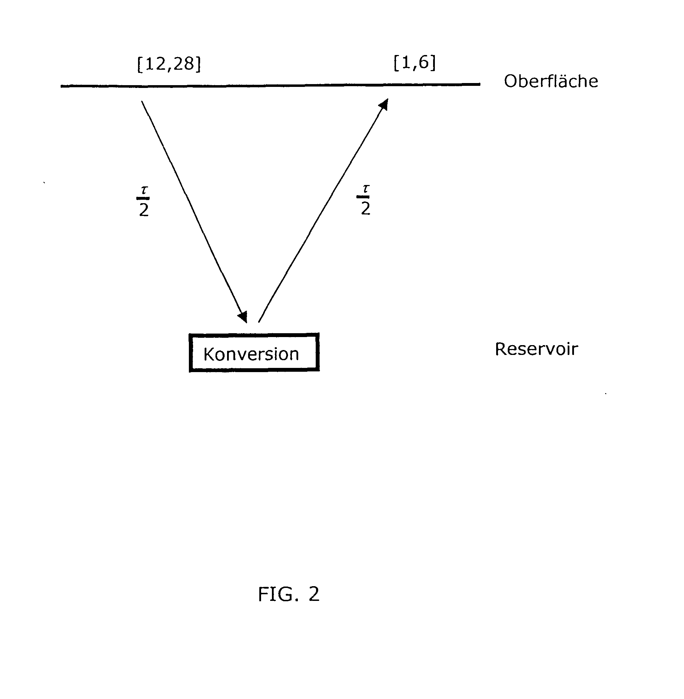

Man muss also eine sinnvolle Korrelation der Variation von Werten aus beiden Frequenzbereichen nur dort suchen, wo eine Zeitverschiebung besteht, die dann der Laufzeit des Signals entspricht (s. Abb. 2).

Durch diese notwendige Bedingung erhält man praktisch als Nebenprodukt erfindungsgemäß eine zusätzliche und sehr wichtige Aussage: Aus dem Zeitversatz des Maximums der Korrelationsfunktion gegen Null (die oben definierte "Mitte") erhält man eine Aussage über die Signallaufzeit und damit eine Aussage über die Tiefe des Reservoirs.

Beträgt z.B. die Signallaufzeit 2000 m/sec und beträgt die Abweichung des Maximums der Korrelationsfunktion 1 sec, so befindet sich das Reservoir in einer Tiefe von 1000 Metern.

Darüberhinaus ergibt sich noch eine weitere Aussage: Sollte die Korrelationsfunktion in einer "vernünftigen" Zeitabweichung mehrere Maxima besitzen, so lässt das entsprechend der Zeitabweichung auf mehrere Horizonte des Kohlenwasserstoffvorkommens schließen und aus den entsprechenden Verhältnissen der Variationen der Amplituden erhält man die Mächtigkeit der unterschiedlichen Horizonte.

7. Die miteinander korrelierenden Maxima aus beiden Frequenzbereichen werden als Koordinatenpaare ($m_1$, $m_2$) gespeichert. Über alle diese Koordinatenpaare ($m_1$, $m_2$) wird eine lineare Regression errechnet

$$y=C_0+C_1 x \tag{5}$$

aus der sich eine Regressionsgerade in der üblichen Form ergibt.

Die Steigung $C_1$ dieser Regressionsgeraden entspricht der Mischsteilheit S und gibt erfindungsgemäß nach (2) eine Aussage über die Mächtigkeit des dem Zeitversatz r zugeordneten Reservoirhorizontes.

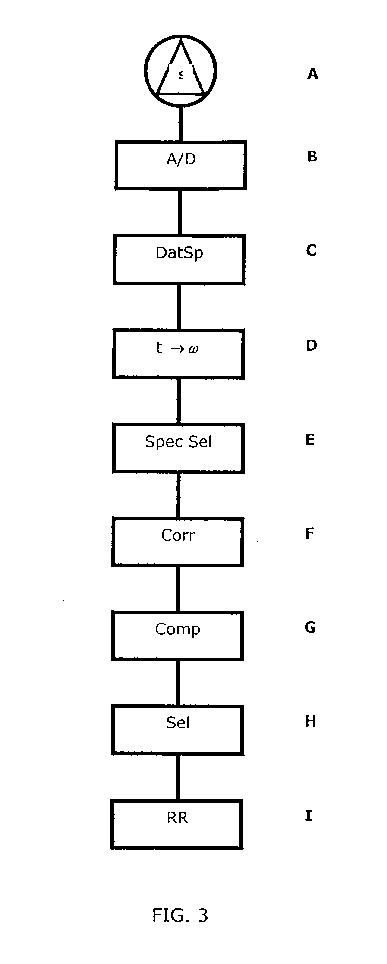

Der Ablauf des erfindungsgemäßen Verfahrens ist beispielhaft in Abb. 3 dargestellt. Darin bedeuten:

A = Seismometer

B = Analog-Digitalwandler

C = Zwischenspeicher

D = Zeit/Frequenz-Transformator (z.B. Fourier-Transformation)

E = Spektralgenerator zur Auswahl und Dimensionierung der Frequenzkanäle

F = Korrelator zur Korrelation aller ausgewählten Frequenzkanäle

G = Komparator zur Bestimmung der zeitlichen Abweichung τ der Maxima der Korrelationsfunktion

H = Selektor zur Auswahl der dem τ entsprechenden Zahlenpaar der Amplitudenvariation der einander zugeordneten Frequenzkanäle

I = Regressionsrechner zur Bestimmung der Mischsteilheit S

Das vorgeschlagene Verfahren, dessen Ergebnisse auf praktischen Messergebnissen beruhen, ist geeignet, ein Problem zu lösen, das bisher bekannte geophysikalische Verfahren zur Erkundung und Überwachung von Kohlenwasserstoffvorkommen nicht lösen konnten, nämlich die quantitative Bestimmung der Mächtigkeit, die Bestimmung ihrer Tiefe und die Unterscheidung von unterschiedlichen Horizonten.

Die Anwendung dieses passiven Verfahrens von der Erdoberfläche aus ist ökologisch sinnvoll (non invasive) und die Möglichkeit der quantitativen Bestimmung führt zu einer erheblich besseren Ausbeute vorhandener Vorkommen und bietet damit einen erheblichen ökonomischen Vorteil.

Bei größeren Wasserflächen können Hydrophone oder auch halb-getauchte Hydrophone verwendet werden. Dieses Verfahren kann auch nur mit oder in Kombination mit anderen akustischen Empfängern durch elektromagnetische Empfänger durchgeführt werden.

**Patentansprüche**

1.  Verfahren zur Erfassung und Erkundung von unterirdischen Kohlenwasserstoffvorkommen durch an oder nahe der Oberfläche angeordnete Empfänger von akustischen Wellen in einem Frequenzbereich von 0,2 - 30 Hz,
    **dadurch gekennzeichnet, dass**
    über einen Zeitraum T akustische Signale aufgenommen, in um einen Zeitraum $\Delta t$ versetzten Zeitfenstern einer Frequenzanalyse unterzogen werden, wonach jedes Zeitfenster in Frequenzkanäle und mindestens zwei Frequenzgruppen unterteilt und dann die Amplitudenwerte der Frequenzkanäle der Frequenzgruppen korreliert und die Zeitabweichung $\tau$ für das erste von Null abweichende Maximum der Korrelation bestimmt und für diese Zeitabweichung $\tau$ das Verhältnis der Variation der Amplitudenwerte der Maxima der Frequenzgruppen von einem Zeitfenster zu mindestens einem weiteren bestimmt und daraus die Mächtigkeit des Kohlenwasserstoffvorkommens abgeleitet und die Tiefe aus der Zeitabweichung $\tau$ berechnet wird.

2.  Verfahren nach Anspruch 1
    **dadurch gekennzeichnet, dass** das Verhältnis S bzw. die Mischsteilheit S der Variation der Amplitudenwerte nach

    $$S = \frac{\Delta P_1 [1.6]}{\Delta P_2 [12,28]}$$

    bestimmt wird, wobei S proportional der Mächtigkeit des Kohlenwasserstoffvorkommens unter dem akustischen Empfänger ist, wobei $\Delta P_1$ [1.6] die Variation eines Maximums der Frequenzanteile im Intervall [1.6] Hz im Zeitraum $\Delta t$ ist und $\Delta P_2$ [12,28] die Variation eines Maximums der Frequenzanteile im Intervall [12,28] Hz im Zeitraum $\Delta t$ ist und die Mächtigkeit des Kohlenwasserstoffvorkommens nach der Beziehung NPZT$=\frac{S}{k}$ bestimmt wird, wobei NPZT =" Net Oil Pay Zone Thickness" und k ein Proportionalitätsfaktor ist.

3.  Verfahren nach Anspruch 1 oder 2,
    **dadurch gekennzeichnet, dass** für ein vorgegebenes $\tau$ i (i = 1 bis n) schrittweise iterativ die korrelierbaren Maxima der Frequenzkanäle aus verschiedenen Zeitfenstern ermittelt werden.

4.  Verfahren nach Anspruch 1 bis 3,
    **dadurch gekennzeichnet, dass** eindimensionale akustische Empfänger zur Aufnahme der Signale verwendet werden.

5.  Verfahren nach Anspruch 1 bis 3,
    **dadurch gekennzeichnet, dass** dreidimensionale akustische Empfänger zur Aufnahme der Signale verwendet werden.

6.  Verfahren nach einem der Ansprüche 1 bis 5,
    **dadurch gekennzeichnet, dass** als akustische Empfänger Hydrophone verwendet werden, die halb getaucht oder am Meeresboden angeordnet sind.

7.  Verfahren nach einem der Ansprüche 1 bis 6,
    **dadurch gekennzeichnet, dass** elektromagnetische Empfänger zusätzlich oder alternativ verwendet werden.

8.  Verfahren nach einem der Ansprüche 1 bis 7,
    **dadurch gekennzeichnet, dass** die Signalverarbeitung off-line über einen vorgegebenen Zeitraum erfolgt.

9.  Verfahren nach einem der Ansprüche 1 bis 7,

**dadurch gekennzeichnet, dass** die Signalverarbeitung on-line kontinuierlich bei vorgegebenem Verarbeitungszeitraum erfolgt.

10. Verfahren nach einem der Ansprüche 1 bis 9,
**dadurch gekennzeichnet, dass** als akustische Empfänger ein oder mehrere Seismometer verwendet werden, deren Signale synchron oder asynchron verarbeitet werden.

FIG. 1

∇   - 1

△   - 0.87

τ   0.13

[12,28]　　　　　　　　[1,6]　　　Oberfläche

$\frac{\tau}{2}$　　　　　　$\frac{\tau}{2}$

| Konversion |　　　Reservoir

FIG. 2

FIG. 3